# FASCICULE DE BREVET EUROPEEN

(11) **EP 0 961 648 B1**
(45) Date de publication et mention de la délivrance du brevet: **09.04.2003**
(21) Numéro de dépôt: 98904230.4
(22) Date de dépôt: 27.01.1998
(51) Int. Cl.: B01D 24/22

(54) **PROCEDE DE REALISATION D'UN PLANCHER DE FILTRE POUR LE TRAITEMENT DES EAUX**
VERFAHREN ZUR HERSTELLUNG VON EINEM BODEN EINES WASSERBEHANDLUNGSFILTERS
METHOD FOR PRODUCING A FILTER BOTTOM FOR WATER TREATMENT

(30) Priorité: 19.02.1997 FR 9701963
(43) Date de publication de la demande: 08.12.1999
(73) Titulaire: ONDEO DEGREMONT, 92500 Rueil-Malmaison (FR)
(72) Inventeur: PERRIN, Didier, F-95240 Cormeilles en Parisis (FR); MOTTE, Alain, F-78830 Bougival (FR)
(74) Mandataire: Armengaud Ainé, Alain
(86) Numéro de dépôt international: FR9800146
(87) Numéro de publication internationale: WO98036816

(56) Documents cités:
- EP-A- 0 324 673
- US-A- 2 711 829
- US-A- 3 110 667
- US-A- 3 456 804

## Description

La présente invention concerne un procédé de réalisation de planchers de filtre pour le traitement des eaux et plus particulièrement de planchers de filtre drainant à crépines ou buselures, supportant le matériau filtrant.

On sait que certaines opérations de filtration dans le domaine du traitement de l'eau sont réalisées sur des filtres, notamment des filtres à matériau filtrant granulaire, dont la structure, généralement en béton armé comporte principalement un cuvelage comprenant un radier s'appuyant sur des parois périphériques, et un plancher perforé supportant le matériau filtrant.

Les fonctions de tels planchers sont bien connues des spécialistes. Elles sont, outre de supporter le matériau filtrant, d'assurer le passage et l'écoulement du liquide, notamment de l'eau filtrée par ledit matériau durant la phase de filtration ainsi que le passage et la répartition des fluides durant la phase de lavage.

D'une manière générale, ces planchers de filtres comportent une structure, constituée de poutres ou de poteaux, qui supporte une dalle monolithique ou un ensemble de dalles préfabriquées.

En ce qui concerne la réalisation de la structure de support du plancher, il existe diverses possibilités notamment :
- le coulage de poutres ou de poteaux en béton dans le cuvelage des filtres ;
- la pose de poutres ou de poteaux préfabriqués, dans le cuvelage des filttres.

Il existe également diverses techniques permettant de réaliser la partie supérieure du plancher.

Ainsi, FR-A-2 596 385 fait connaître un procédé consistant à assembler des dalles ou plaques de petites dimensions, préfabriquées, mises en place, reliées et fixées aux poutres ou poteaux de la structure de support par l'intermédiaire d'un système d'ancrage approprié.

EP-A-0 324 673 décrit un procédé qui consiste à couler une dalle de béton armé sur un coffrage perdu mis en place préalablement sur les poutres ou poteaux constituant la structure de support du plancher de filtre.

La documentation intitulée « MonoFlor Underdrain », publiée par Infilco Degrémont Inc. en Septembre 1990, fait connaître un procédé de fabrication de plancher de filtre qui implique la mise en place d'éléments de coffrage pour la formation des supports ou pieds de la dalle. Cette technique est coûteuse et longue à mettre en oeuvre, car elle exige une horizontalité parfaite de la dalle finale.

Il existe également des techniques de coulage du béton en une seule phase, de l'ensemble structure de support-dalle monolithique mais cette technique fait appel à l'utilisation de plusieurs types de coffrages perdus pour la réalisation respectivement des poutres ou poteaux et de la dalle.

Ces techniques connues présentent un certain nombre d'inconvénients. En effet, elles font appel :
- soit à l'assemblage de nombreux éléments préfabriqués (dalles, tiges, boulons, joints d'étanchéité...) dont la mise en oeuvre est délicate, longue et coûteuse ;
- soit à la mise en oeuvre des poutres, puis de prédalles ou de coffrages perdus posés sur les poutres et enfin au coulage d'une dalle en béton dont la mise en oeuvre de l'ensemble s'avère être délicate et coûteuse ;
- soit à l'assemblage de plusieurs types de coffrages perdus pour la réalisation de l'ensemble structure de support-dalle, cette technique se caratérisant également par une mise en oeuvre délicate et coûteuse.

Afin de pallier les inconvénients des techniques antérieures rappelées ci-dessus, la présente invention se propose d'apporter un procédé de réalisation d'un plancher de filtre en béton permettant de réduire les temps de mise en oeuvre et donc les prix de revient.

En conséquence, cette invention a pour objet un procédé de réalisation d'un plancher de filtre pour le traitement des eaux comportant, dans un cuvelage, une structure constituée de poutres ou de poteaux s'appuyant sur le fond du cuvelage et supportant une dalle pourvue d'une pluralité d'orifices destinés à recevoir des crépines, ladite structure et ladite dalle étant obtenues par coulage de béton directement dans le cuvelage du filtre, dans un coffrage perdu obtenu par l'assemblage d'éléments de coffrage perdu, conformant ladite structure et ladite dalle, caractérisé en ce que le coffrage perdu définissant ladite structure et ladite dalle est obtenu par la dépose côte à côte, sur le fond dudit cuvelage, d'éléments de coffrage perdu d'un seul et unique modèle, ces éléments étant maintenus dans cette configuration par des moyens de fixation.

Le procédé selon l'invention comporte les étapes successives suivantes :
- réalisation du cuvelage du filtre ;
- mise en place des ferraillages des poutres de la structure de support du filtre ;
- positionnement côte à côte, sur le fond du cuvelage et fixation des éléments de coffrage perdu ;
- montage de bagues protégées par des capuchons, sur les éléments de coffrage perdu aux emplacements prévus pour les crépines ;
- réalisation du ferraillage de la partie supérieure de la dalle ;
- coulage du béton directement dans le cuvelage du filtre, dans ledit coffrage perdu et
- enlèvement des capuchons protégeant les bagues et montage des crépines sur lesdites bagues.

Selon l'invention, le coulage de la structure de support et de la dalle peut être réalisé soit en une seule étape, soit en deux étapes.

L'invention vise également un élément de coffrage perdu pour la mise en oeuvre du procédé tel que défini ci-dessus, ainsi qu'un filtre pour le traitement des eaux comportant un plancher en béton réalisé conformément à ce procédé et en mettant en oeuvre un coffrage perdu tel que spécifié ci-dessus.

D'autres caractéristiques et avantages de la présente invention ressortiront de la description faite ci-après en référence aux dessins annexés qui en illustrent des exemples de réalisation dépourvus de tout caractère limitatif.

Sur ces dessins :
- La figure 1 illustre de façon schématique la mise en oeuvre du procédé objet de la présente invention selon un premier exemple de réalisation ;
- La figure 2 est une vue schématique similaire à la figure 1 illustrant un second exemple de réalisation ;
- La figure 3 est une vue partielle en plan d'un exemple de réalisation d'un coffrage perdu mis en oeuvre dans le procédé objet de l'invention,
- Les figures 4 et 5 sont respectivement des coupes selon IV-IV et V-V de la figure 3 et,
- Les figures 6 et 7 illustrent une variante de l'invention respectivement en vue partielle en coupe verticale et en une vue selon F de la figure 6.

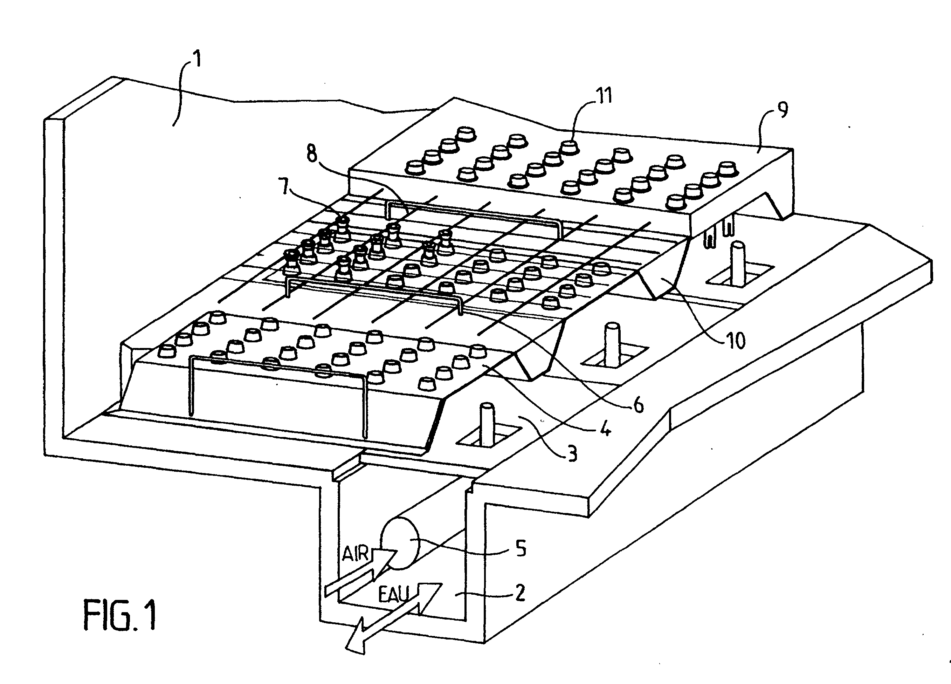

On se réfère en premier lieu à la figure 1 qui se réfère à la réalisation d'un plancher de filtre dans lequel la collecte et/ou la distribution des fluides est assurée par un canal 2 situé sous le plancher du filtre. Sur cette figure 1 on a désigné par la référence 1 le cuvelage du filtre qui est constitué de façon connu par un radier s'appuyant sur des parois latérales périphériques. Le canal de distribution et/ou de collecte des eaux 2 est recouvert de dalles telles que 3 qui assurent le support des éléments de coffrage 4 selon l'invention et qui permettent le passage de l'eau. On prévoit également un collecteur 5 de soufflerie assurant la distribution sous le plancher de filtre de l'air nécessaire au procédé.

Selon la présente invention, après la réalisation du cuvelage 1 du filtre, on met en place des ferraillages 6 destinés à assurer la solidarisation mécanique du plancher avec le cuvelage. On pose ensuite les éléments de coffrage perdu 4 que l'on fixe sur le cuvelage.

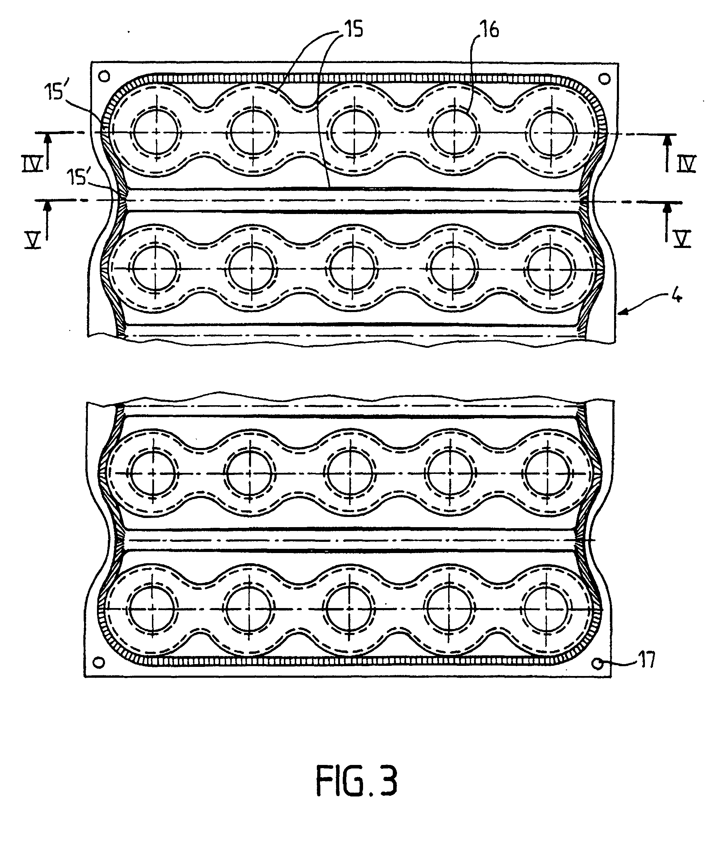

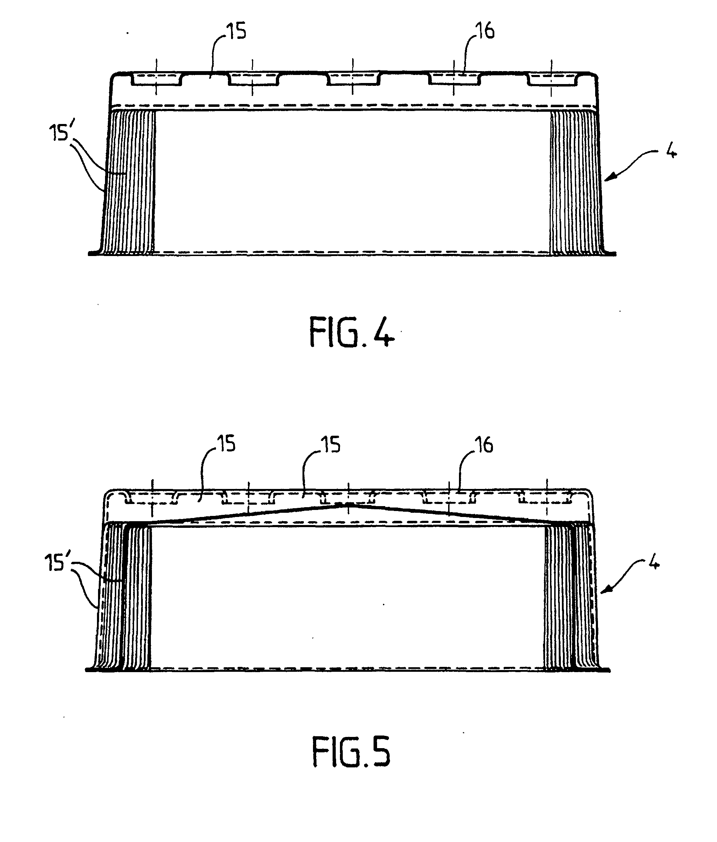

On a représenté sur les figures 3 et 4 un exemple de réalisation d'un type unique d'élément de coffrage utilisé dans le procédé objet de l'invention. Cet élément de coffrage réalisé en matière plastique, en acier ou en matériau composite (résine plus fibres de verre, béton, fibres de verre) présente une épaisseur qui varie en fonction du matériau, de son mode de réalisation, de sa largeur et de sa hauteur. De préférence, cette épaisseur est comprise en 1 et 15 mm, par exemple entre 3 et 7 mm. Sa hauteur est choisie en fonction de la vitesse désirée du fluide sous le plancher de filtre (le choix d'une vitesse adaptée permet d'obtenir une bonne équirépartition sur l'ensemble des crépines d'un même plancher) et de l'accessibilité souhaitée. Cette hauteur est comprise entre 100 et 700 mm, de préférence entre 120 et 250 mm. La largeur de l'élément de coffrage tel que 4 est déterminée en fonction. des caractéristiques mécaniques du matériau utilisé pour la réalisation de cet élément coffrage, de son coût et de son mode de fabrication. Selon l'invention, cette largeur est comprise entre 300 et 1 300 mm, de préférence entre 450 et 700 mm. La longueur de l'élément de coffrage peut être comprise par exemple entre 2 et 7 mètres.

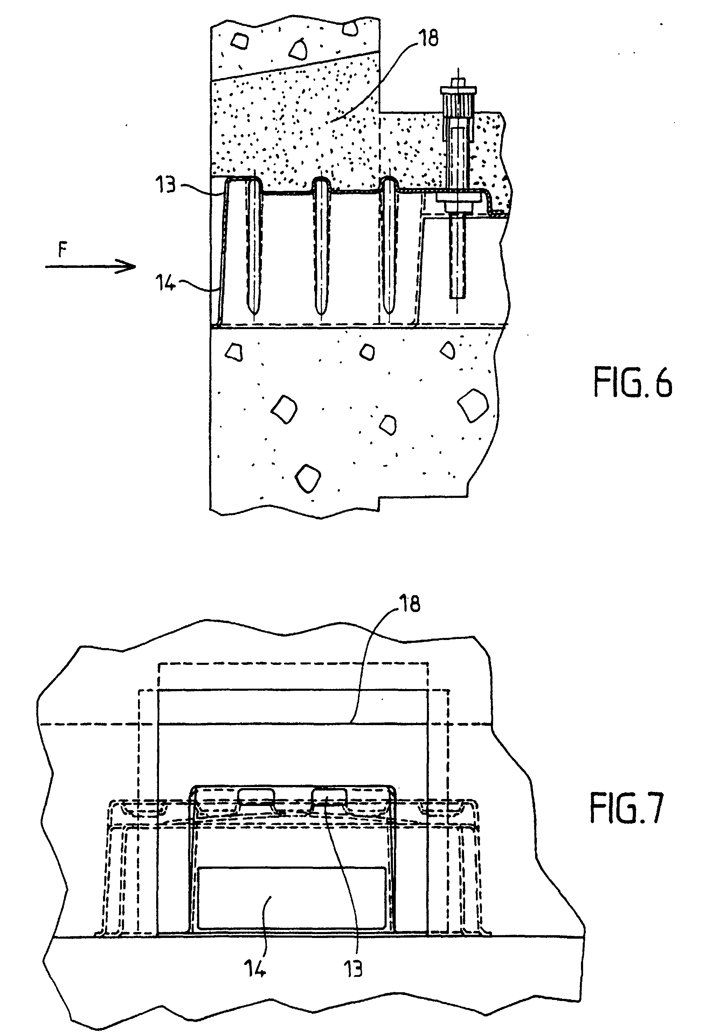

On se réfère aux figures 6 et 7 des dessins annexés qui illustrent une variante de réalisation de l'élément de coffrage selon l'invention. Dans cette variante, l'air est distribué sous le plancher de filtre par des orifices tels que 13 et l'eau est distribuée et/ou collectée par des orifices tels que 14. Les orifices 13 et 14 sont réalisés lors de la fabrication de l'élément de coffrage comme on le voit sur ces figures. Un orifice de grande section, d'une géométrie adéquate est réalisé lors du coffrage de la paroi du filtre, cet orifice permettant de relier le canal 2 à l'élément de coffrage 4. Un scellement 18 est ensuite effectué à l'aide d'un matériau approprié. Par ailleurs, le mode de mise en oeuvre du procédé de l'invention pour réaliser le plancher de filtre à l'aide des éléments de coffrage perdu tels que 4 est identique à celui décrit ci-dessus en référence à la figure 1.

La forme de l'élément de coffrage 4 est choisie de manière à obtenir une rigidité maximale dans les plans horizontaux et verticaux de cet élément. Dans l'exemple de réalisation illustré sur les dessins, l'élément de coffrage 4 comporte dans ce but, des nervures telles que 15 et 15'. Leur forme est étudiée de manière à réduire au maximum les pertes de charge créées par les parois de l'élément de coffrage. Dans ce but, on privilégie, selon l'invention, des géométries à forte courbure en particulier sur les parois latérales de l'élément de coffrage.

Par ailleurs, la forme de l'élément de coffrage 4 est définie de manière que les pressions exercées sur ses parois latérales par le béton lors de son coulage, créent une contre flèche en partie supérieure de l'élément pour compenser partiellement la flèche due au poids du béton. Cette géométrie particulière permet d'optimiser l'épaisseur du coffrage.

La fixation des éleménts de coffrage perdu tels que 4 s'effectue par tout moyen approprié, l'élément 4 étant muni à cet effet de trous de fixation tels que 17 permettant sa solidarisation avec le radier du filtre. L'étanchéité entre l'élément 4 et le radier, ou les parois du filtre, est assurée par un joint approprié. Chaque élément de coffrage 4 comporte par ailleurs, en sa partie supérieure, des orifices destinés à recevoir des bagues sur lesquelles viennent se fixer les crépines ou buselures du plancher de filtre.

Après la fixation des éléments de coffrage perdu tels que 4 sur le radier du filtre, on met en place les bagues telles que 7, munies de capuchons de protection, dans les orifices 16 prévus à cet effet sur la paroi supérieure des éléments de coffrage perdu 4.

On met ensuite en place les ferraillages 8 destinés à assurer la tenue de la dalle 9 qui sera coulée ensuite dans l'élément 4 et l'on réalise les poutres 10 de la structure de support ainsi que la dalle 9 du plancher de filtre, par coulage du béton en une ou deux étapes.

Dès que le béton est sec on enlève les capuchons protégeant les bagues 7 et les crépines 11 sont montées sur les bagues 7. Le plancher de filtre est alors terminé.

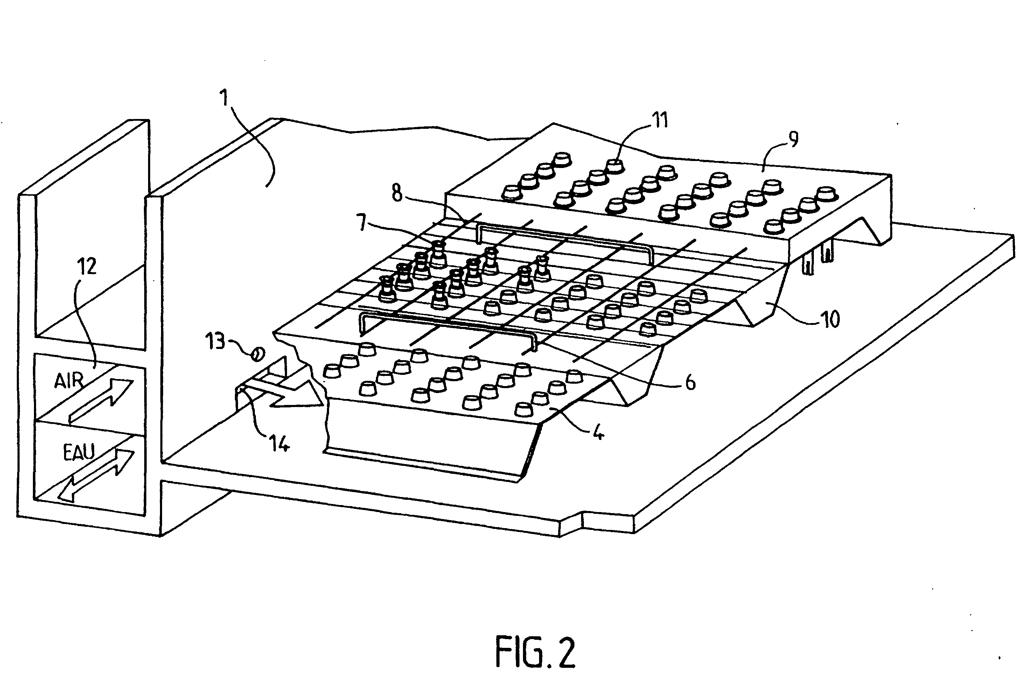

L'exemple de réalisation illustré par la figure 2 ne diffère du mode d'exécution de la figure 1 que par le fait que la distribution d'air et la collecte et/ou la distribution de l'eau sont assurées par un canal 12 qui est extérieur au cuvelage 1 du filtre. Dans cette variante, l'air est distribué sous le plancher de filtre par des orifices tels que 13 et l'eau est distribuée et/ou collectée par des orifices tels que 14. Par ailleurs, le mode de mise en oeuvre du procédé de l'invention pour réaliser le plancher de filtre à l'aide des éléments de coffrage perdu tels que 4 est identique à celui décrit ci-dessus en référence à la figure 1.

Il demeure bien entendu que la présente invention n'est pas limitée aux exemples de réalisation décrits et/ou représentés mais qu'elle en englobe toutes les variantes qui entrent dans le cadre de la portée des revendications annexées.

## Revendications

1. Procédé de réalisation d'un plancher de filtre pour le traitement des eaux comportant, dans un cuvelage, une structure (10) constituée de poutres ou de poteaux s'appuyant sur le fond du cuvelage (1) et supportant une dalle (9) pourvue d'une pluralité d'orifices destinés à recevoir des crépines (11), ladite structure et ladite dalle étant obtenues par coulage de béton directement dans le cuvelage du filtre, dans un coffrage perdu obtenu par l'assemblage d'éléments de coffrage perdu conformant ladite structure et ladite dalle,
**caractérisé en ce que** le coffrage perdu définissant ladite structure et ladite dalle est obtenu par la dépose côte-à-côte, sur le fond dudit cuvelage, d'éléments de coffrage perdu (4) d'un seul et unique modèle, ces éléments étant maintenus dans cette configuration par des moyens de fixation (17).

2. Procédé selon la revendication 1 **caractérisé en ce que** le coulage de la structure de support (10) est réalisé en une seule étape.

3. Procédé selon la revendication 1 **caractérisé en ce que** le coulage de la structure de support (10) est réalisé en deux étapes.

4. Procédé selon l'une quelconque des revendications précédentes **caractérisé en ce qu'**il comporte les étapes successives suivantes :
- réalisation du cuvelage (1) du filtre,
- mise en place des ferraillages (6) des poutres de la structure de support du filtre ;
- positionnement côte à côte, sur le fond du cuvelage (1) et fixation des éléments de coffrage perdu (4) ;
- montage de bagues (7) protégées par des capuchons, sur les éléments de coffrage perdu aux emplacements prévus pour les crépines ;
- réalisation du ferraillage (8) de la partie supérieure de la dalle (9);
- coulage du béton directement dans le cuvelage du filtre, dans ledit coffrage perdu.
- enlèvement des capuchons protégeant les bagues et montage des crépines (11) sur lesdites bagues

5. Elément de coffrage perdu (4) pour la mise en oeuvre d'un procédé selon l'une quelconque des revendications 1 à 4
**caractérisé en ce qu'**il est réalisé en matière plastique, en acier ou en matériau composite et qu'il est conformé de manière à ce que, par la juxtaposition côte à côte d'une pluralité de ces éléments (4) sur une base horizontale plane, on obtienne un coffrage permettant d'obtenir par coulage de béton une structure (10) de poutres de poteaux supportant une dalle (9).

6. Elément de coffrage perdu selon la revendication 5 **caractérisé en ce que** son épaisseur est comprise entre 1 et 15 mm, de préférence entre 3 et 7 mm.

7. Elément de coffrage perdu selon l'une quelconque des revendications 5 et 6
**caractérisé en ce que** sa hauteur est comprise entre 100 et 700 mm, de préférence entre 120 et 250 mm

8. Elément de coffrage perdu selon l'une quelconque des revendications 5 à 7
**caractérisé en ce que** sa largeur est comprise entre 300 et 1 300 mm, de préférence entre 450 et 700 mm.

9. Elément de coffrage perdu selon l'une quelconque des revendications 5 à 8
**caractérisé en ce que** sa longueur est comprise entre 2 et 7 m.

10. Elément de coffrage perdu selon l'une quelconque des revendications 5 à 9
**caractérisé en ce qu'**il est conformé de manière que les pressions exercées sur ses parois latérales lors du coulage du béton créent une contre-flèche à sa partie supérieure pour compenser, au moins partiellement la flèche occasionnée par le poids du béton.

11. Elément de coffrage perdu selon l'une quelconque des revendications 5 à 10
**caractérisé en ce que** ses parois sont conformées de manière à minimiser les pertes de charge du fluide circulant à l'intérieur du filtre.

12. Elément de coffrage perdu selon la revendication 11 **caractérisé en ce que** ses parois sont pourvues de nervures (15, 15') assurant la rigidité dans ses plans horizontaux et verticaux

13. Elément de coffrage perdu selon l'une quelconque des revendications 5 à 12
**caractérisé en ce qu'**il comporte, en partie supérieure, une pluralité d'orifices (16) destinés à recevoir les bagues (7) sur lesquelles viennent se fixer les crépines de filtre et en partie inférieure des trous de fixation (17) en vue de sa solidarisation avec le radier du filtre.

14. Filtre pour le traitement des eaux **caractérisé en ce qu'**il comporte un plancher réalisé conformément au procédé spécifié dans l'une quelconque des revendications 1 à 4 en mettant en oeuvre un élément de coffrage perdu selon l'une quelconque des revendications 5 à 13.

## Claims

1. Method for producing a filter floor for the treatment of water having, in a lining, a structure (10) constituted by beams or posts resting on the floor of the lining (1) and supporting a slab (9) provided with a plurality of orifices for receiving strainers (11), said structure and said slab being obtained by casting concrete directly into the lining of the filter, in a permanent shuttering obtained by the assembly of permanent shuttering elements shaping said structure and said slab, **characterized in that** the permanent shuttering defining said structure and said slab is obtained by the juxtaposed deposition on the bottom of said lining of permanent shuttering elements (4) of a single model, said elements being maintained in said configuration by fixing means (17).

2. Method according to claim 1, **characterized in that** the casting of the support structure (10) is performed in a single stage.

3. Method according to claim 1, **characterized in that** the casting of the support structure (10) is performed in two stages.

4. Method according to any one of the preceding claims, **characterized in that** it comprises the following successive stages:
- producing the lining (1) of the filter,
- putting into place of reinforcements (6) of the beams of the filter support structure,
- juxtaposed positioning on the bottom of the lining (1) and fixing the permanent shuttering elements (4),
- fitting rings (7) protected by caps on the permanent shuttering elements at locations intended for the strainers,
- implementing the reinforcement (8) of the upper part of the slab (9),
- casting concrete directly into the lining of the filter in said permanent shuttering,
- removing the caps protecting the rings and fitting strainers (11) on said rings.

5. Permanent shuttering element (4) for implementing a method according to any one of the claims 1 to 4, **characterized in that** it is made from a plastics material, steel or a composite material and is shaped in such a way that by juxtapositioning a plurality of such elements (4) on a planar horizontal base, a shuttering is obtained making it possible by casting concrete to obtain a beam/post structure (10) supporting a slab (9).

6. Permanent shuttering element according to claim 5, **characterized in that** its thickness is between 1 and 15 mm, preferably between 3 and 7 mm.

7. Permanent shuttering element according to any one of the claims 5 and 6, **characterized in that** its height is between 100 and 700 mm, preferably between 120 and 250 mm.

8. Permanent shuttering element according to any one of the claims 5 to 7, **characterized in that** its width is between 300 and 1300 mm, preferably between 450 and 700 mm.

9. Permanent shuttering element according to any one of the claims 5 to 8, **characterized in that** its length is between 2 and 7 m.

10. Permanent shuttering element according to any one of the claims 5 to 9, **characterized in that** it is shaped in such a way that the pressures exerted on its side walls during the casting of the concrete create a reverse deflection in its upper part in order to at least partly compensate the deflection caused by the weight of the concrete.

11. Permanent shuttering element according to any one of the claims 5 to 10, **characterized in that** its walls are shaped in such a way as to minimize the pressure losses of the fluid circulating within the filter.

12. Permanent shuttering element according to claim 11, **characterized in that** its walls are provided with ribs (15, 15') ensuring the rigidity of its horizontal and vertical planes.

13. Permanent shuttering element according to any one of the claims 5 to 12, **characterized in that** in its upper part it has a plurality of orifices (16) for receiving the rings (7) on which are fixed the filter strainers and in its lower part is provided with fixing holes (17) for joining the same to the filter apron.

14. Filter for the treatment of water, **characterized in that** it incorporates a floor produced in accordance with the method of any one of the claims 1 to 4 using a permanent shuttering element according to any one of the claims 5 to 13.

## Patentansprüche

1. Verfahren zur Herstellung eines Filterbodens für die Wasserbehandlung, der in einem Filtergehäuse eine Struktur (10) umfasst, welche aus Trägern oder Streben besteht, die auf dem Boden des Filtergehäuses (1) aufliegen und eine Platte (9) tragen, die mit einer Vielzahl von Öffnungen für die Aufnahme von Filterköpfen (11) versehen ist, wobei Struktur und Platte durch Gießen von Beton direkt in das Filtergehäuse des Filters in eine verlorene Schalung hergestellt werden, die durch einen Zusammenbau von verlorenen Schalungselementen erhalten worden ist, der diese Struktur und diese Platte formt, **dadurch gekennzeichnet, dass** die verlorene Schalung, welche die Struktur und die Platte formt, erhalten wird, indem auf dem Boden des Filtergehäuses verlorene Schalungselemente (4) eines einzigen und einzigartigen Modells nebeneinander aufgebracht werden, wobei die Elemente in dieser Anordnung durch Befestigungsmittel (17) zusammengehalten werden.

2. Verfahren nach Anspruch 1, **dadurch gekennzeichnet, dass** das Gießen der Tragstruktur (10) in einer einzigen Stufe durchgeführt wird.

3. Verfahren nach Anspruch 1, **dadurch gekennzeichnet, dass** das Gießen der Tragstruktur (10) zweistufig durchgeführt wird.

4. Verfahren nach einem der vorhergehenden Ansprüche, **dadurch gekennzeichnet, dass** es die aufeinander folgenden Stufen
- Herstellung des Filtergehäuses (1),
- Anbringung der Bewehrung (6) für die Träger der Tragstruktur des Filters,
- Positionierung und Befestigung der verlorenen Schalungselemente (4) nebeneinander auf dem Boden des Filtergehäuses (1)
- Anbringung von von Schutzkappen geschützten Ringen (7) an den für die Filterköpfe vorgesehenen Stellen auf den verlorenen Schalungselementen,
- Herstellung der Bewehrung (8) für den oberen Teil der Platte (9),
- Gießen des Betons direkt in das Filtergehäuse in der verlorenen Schalung und
- Abnahme der die Ringe schützenden Schutzkappen und Anbringung der Filterköpfe (11) auf diesen Ringen
umfasst.

5. Verlorenes Schalungselement (4) für die Durchführung eines Verfahrens nach einem der Ansprüche 1 bis 4, **dadurch gekennzeichnet, dass** es aus Kunststoff, Stahl oder Verbundwerkstoff hergestellt und derart ausgebildet ist, dass durch Nebeneinander-Anordnen einer Vielzahl dieser Elemente (4) auf einer horizontalen ebenen Grundlage eine Schalung erhalten wird, die es ermöglicht, eine eine Platte (9) tragende Streben- bzw. Träger-Struktur (10) durch Gießen von Beton herzustellen.

6. Verlorenes Schalungselement nach Anspruch 5, **dadurch gekennzeichnet, dass** seine Dicke 1 bis 15 mm und vorzugsweise zwischen 3 und 7 mm beträgt.

7. Verlorenes Schalungselement nach Anspruch 5 oder 6, **dadurch gekennzeichnet, dass** seine Höhe 100 bis 700 mm und vorzugsweise zwischen 120 und 250 mm beträgt.

8. Verlorenes Schalungselement nach einem der Ansprüche 5 bis 7, **dadurch gekennzeichnet, dass** seine Breite 300 bis 1 300 mm und vorzugsweise zwischen 450 und 700 mm beträgt.

9. Verlorenes Schalungselement nach einem der Ansprüche 5 bis 8, **dadurch gekennzeichnet, dass** seine Länge 2 bis 7 m beträgt.

10. Verlorenes Schalungselement nach einem der Ansprüche 5 bis 9, **dadurch gekennzeichnet, dass** es derart geformt ist, dass die beim Betongießen auf seine Seitenwände ausgeübten Drücke in seinem oberen Teil eine Gegenbiegung erzeugen, um die vom Betongewicht verursachte Biegung wenigstens teilweise zu kompensieren.

11. Verlorenes Schalungselement nach einem der Ansprüche 5 bis 10, **dadurch gekennzeichnet, dass** seine Wände derart geformt sind, dass die Druckverluste des im Filter strömenden Fluids minimiert werden.

12. Verlorenes Schalungselement nach Anspruch 11, **dadurch gekennzeichnet, dass** seine Wände mit Rippen (15, 15') versehen sind, welche die Steifigkeit in der horizontalen und vertikalen Ebene sicherstellen.

13. Verlorenes Schalungselement nach einem der Ansprüche 5 bis 12, **dadurch gekennzeichnet, dass** es im oberen Teil eine Vielzahl von Öffnungen (16), die vorgesehen sind, die Ringe (7) aufzunehmen, auf denen die Filterköpfe befestigt werden, und im unteren Teil Befestigungslöcher (17) für seine Verbindung mit der Filtersohle enthält.

14. Filter für die Wasserbehandlung, **dadurch gekennzeichnet, dass** er einen Boden umfasst, der gemäß dem in einem der Ansprüche 1 bis 4 definierten Verfahren hergestellt ist, worin ein verlorenes Schalungselement nach einem der Ansprüche 5 bis 13 verwendet wird.
